# EUROPEAN PATENT APPLICATION

(11) **EP 1 303 081 A2**
(43) Date of publication of application: **16.04.2003**
(21) Application number: 02292298.3
(22) Date of filing: 19.09.2002
(51) Int. Cl.: H04L 12/437

(54) **Method for propagating the fault information in a RPR network and corresponding RPR packet**

(30) Priority: 10.10.2001 IT MI20012088
(71) Applicant: ALCATEL, 75008 Paris (FR)
(72) Inventor: Busi, Italo, 20023 Cerro Maggiore (Milano) (IT); Grandi, Pietro, 20139 Milano (IT); Fontana, Michele, 23878 Verderio Superiore (Lecco) (IT)
(74) Representative: Lamoureux, Bernard

(57) **Abstract**

Described is a method for propagating the fault information on a Resilient Packet Ring network, wherein each Resilient Packet Ring network element sends periodically a keep-alive message containing the fault information to its neighbor elements on both the ringlet directions, in order to inform the neighbor elements that the network element is working or to propagate the information about the detected fault. Once that a fault notification is propagated, every network element has to wait some time before undertaking the necessary steps in order to be sure that the fault notification is persistent.

## Description

The present invention relates to the field of the RPR (Resilient Packet Ring) networks, and more precisely to a method for propagating the fault information on a RPR network and to the corresponding packet.

In IEEE 802.17 RPR (Resilient Packet Ring) a new technology is being defined by the IEEE Standardization Institute, for optimizing the employment of band which is available for the transport of packets on ring networks, hereunder defined RPR networks, in particular in the context of MAN (Metropolitan Area Networks), for instance described in the general aspects in the article "Resilient Packet Rings for Metro Networks", Global Optical Communication, Pages 142-146, authors N. Cole, J. Hawkins, M. Green, R. Sharma, K. Vasani, available to the public in the Internet web site http://www.rpralliance.org/.

The ringlet technology can be based for instance upon physical layers of transport SDH, SONET or Ethernet, where the packets of the RPR networks are physically transported.

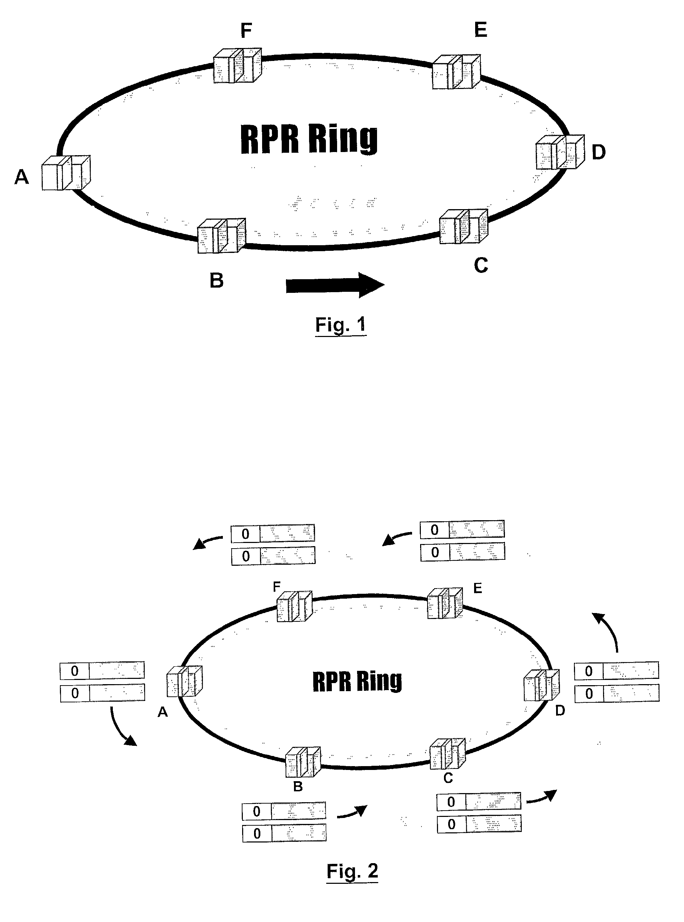

As illustrated in Fig. 1, a known RPR network is based on a configuration of dual counter rotating ringlets, a clockwise direction inner ringlet, indicated by a grey color, and a counter-clockwise direction outer ringlet, indicated by a black color. Both the ringlets are used to transport data and/or control RPR packets among a series of RPR stations. For instance, with reference to Fig. 1, in a series of RPR network elements, from A to F.

A RPR packet is meant a frame of layer-2 of the known stack ISO-OSI or TCP-IP. The RPR control packets are designed to carry out the known RPR functions, the so-called "topology discovery", "protection switching" and "bandwidth management" functions.

The "topology discovery" function is based on a mechanism which allows to each RPR ringlet station to identify and localize all the other stations and their distances. When an RPR station inserts a new RPR packet into the ringlet, it selects the inner or outer ringlet in order to follow the shortest path towards the RPR destination station, in terms of number of RPR stations to be crossed, according to the network topology.

The function of "protection switching" allows to guarantee the so-called "resiliency", that is the protection capacity at RPR packet level, through a reaction within a pre-established period of time (50 ms) from a fault detection. In case of fault in the RPR network, the RPR control packets of the "protection switching" function are used to implement an APS type protocol (Automatic Protection Switching). Both the known "wrapping protection" mechanism, that is conceptually similar to the known MS-Spring SDH system applied in the RPR layer, and "steering protection" mechanism, conceptually similar to the known transoceanic MS-SPRING system applied in the RPR level, are supported.

The RPR control packets for bandwidth management in the RPR ringlet are used to guarantee an adequate access to the ringlet among the various RPR stations, independently from the physical location in the ringlet.

The RPR technology allows the spatial re-use of the band, by supporting the function of "destination stripping": namely, a unicast RPR packet is removed from the ringlet of the RPR destination station without traveling the whole ringlet, thus leaving the remaining path available for re-use thereof. On the contrary, the multicast, or broadcast or unicast RPR packets whose RPR destination station is not on that ringlet can be subjected to the "source stripping", namely they can be removed from the same RPR source station after having traveled through the whole ringlet. A "time to live" procedure is also used to avoid that the RPR packets circulate in the ringlet indefinitely.

Even if the format of a RPR packet has not yet been standardized in detail, the format of the RPR packet comprises a header and a payload. The payload contains the data, namely the high level information to be transported. The header, on the contrary, requires at least the following fields:
- identification address of the RPR destination station;
- identification address of the RPR source station;
- frame type, in order to distinguish among the various types of RPR packets of user's data, control or other specific RPR frames;
- type of protocol to identify the type of information that is transported in the payload;
- "time to live" TTL: maximum number of nodes, where the packet can be propagated in the network, in order to avoid that the RPR packets circulate in the ringlet indefinitely;
- Ringlet ID: it identifies the path of the outer or inner ringlet, where the RPR packet is inserted;
- CoS, in order to identify the class of service for the RPR packet, namely its priority.

Some protection mechanisms of the RPR packets at packet level in the RPR network are known. Said protection mechanisms have to intervene in order to solve the fault situations in a very short period of time, typically 50 ms.

There is, therefore, the problem that the fault information exchange among the RPR network elements has to be particularly rapid and effective, in order to allow to all the network RPR elements to react immediately to guarantee the elimination of the fault in a very short period of time (50 ms).

The object of the present invention is therefore to solve the above said problems and to indicate a method to propagate the fault information in a RPR network which allows to implement a logical information channel that is continuous and dedicated to the exchange of fault information on both the RPR ringlets.

According to the present invention, each RPR network element sends periodically a "keep-alive" message (in the form of a RPR control packet) containing the fault information to the neighbor elements in both the ringlet directions. This message has the dual function of:
- informing the neighbor elements that the network element is working: in such a way a fault can be declared if the "keep-alive" message is not received for a certain period of time;
- propagating the fault information regarding the detected fault.

The forwarding of the "keep-alive" message comprises a synchronous forwarding of a periodical message with a certain fixed timing, usually to regenerate the previous messages and an asynchronous forwarding of messages *una tantum* to report indications of a just generated fault.

Besides, once that a fault notification is propagated, every network element has to wait some time before undertaking the necessary steps, in order to be sure that the fault notification is persistent.

Another object of the present invention is to define the format of the RPR control packet bringing the "keep-alive" message.

In order to achieve these objects, the present invention relates to a method to propagate the fault information on a RPR network and the to the corresponding RPR packet, as better illustrated in the claims, which are an integral part of the present description.

The method to propagate the fault information on a RPR network according to the present invention has the main advantage of providing a continuous RPR information channel. This allows to the RPR network elements to be rapidly informed about the fault also in the case some "keep-alive" protection messages are lost.

A second advantage is that the method according to the present invention does not require further corrective actions by the algorithm of "topology discovery" to detect the presence of a fault and its localization.

A third advantage is due to the fact that in case of two or more contemporaneous faults with different priorities, no unnecessary "protection switching", due to a transitory condition, is implemented thanks to the checking mechanism of the persistency of the fault indication.

Further objects and advantages of the present invention will become clear from the following detailed description of an embodiment thereof and from the attached drawings, given by way of a non-limiting example, wherein:
- Figure 1 illustrates the structure of a known RPR network, already described above;
- Figure 2 illustrates the information sent in a fault-free case, according to the present invention;
- Figure 3 illustrates the information sent in case of a single-fault ringlet, the fault resulting in a break of both the routes among the same network elements;
- Figure 4 illustrates the information sent in case of a two-fault ringlet, each one resulting in a break of both the routes among the same network elements;
- Figure 5 illustrates the information sent in case of single-fault ringlet and the break of only one route in a direction;
- Figure 6 illustrates the information sent in case of dual local fault detected by the same network element;
- Figures 7 and 8 illustrates respectively a time diagram and an example of inner circuit in a network element for the generation of fault information messages.

Hereunder, there is the description of a method to propagate the fault information in a RPR network which is the subject of the present invention.

As already said, a continuous information logical channel is implemented which is dedicated to the fault information exchange on both the RPR ringlets.

Each RPR network element sends periodically a "keep-alive" message containing the fault information to the adjacent elements in both the directions of ringlet. This message has the dual function of:
- informing the neighbor elements that the network element is working: in such a way, a fault can be declared if the "keep-alive" message is not received for a certain period of time;
- propagating the protection information regarding the detected fault.

The forwarding of the "keep-alive" message comprises a synchronous forwarding of a periodical message with a certain fixed timing (for instance one signal at each millisecond), usually to regenerate the previous messages and an asynchronous forwarding of una-tantum messages to report the just generated fault indications.

A fault is always detected in the incoming direction and is always considered bi-directional, namely if a fault is detected in the incoming direction, also the transmission direction of the other ringlet is declared faulted.

It is known that the detection technique of faults on the RPR ringlet is well-known and is not the subject of the present invention which has the object to propagate the fault information on a RPR ringlet.

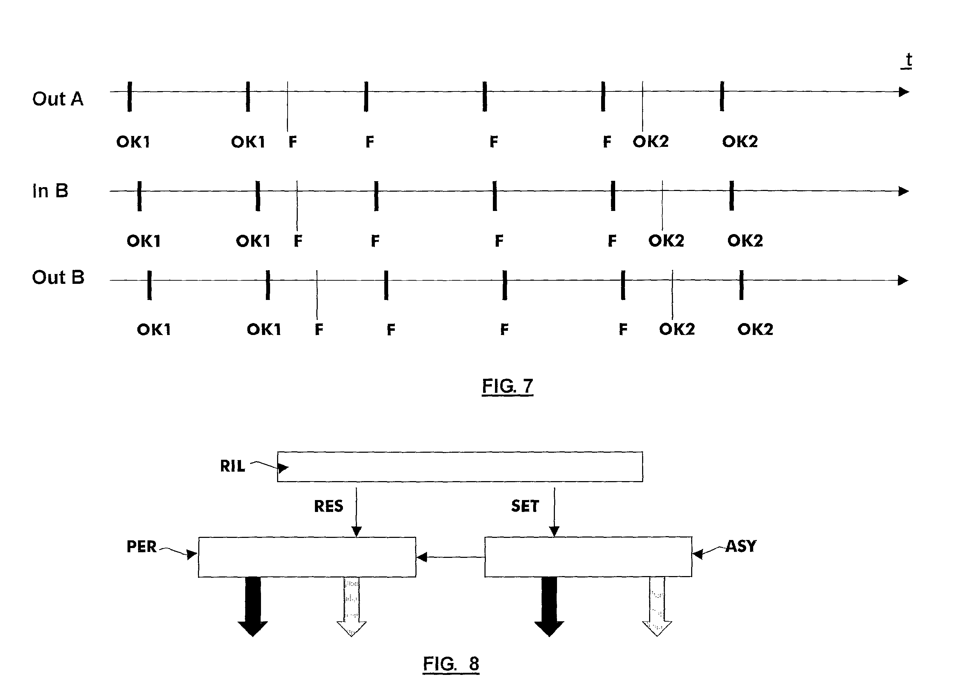

As hereunder explained in detail with reference to Figures 7 and 8, the generic network element can be in two situations according to the point of occurring and/or detecting of fault: in a first case, if the fault is detected by the network element itself, the latter generates immediately (that is with the top priority) a "keep-alive" message which forwards the fault information and sends it immediately to the neighbor elements in both the directions; in a second case, if the fault has been detected by another element which has sent a "keep-alive" message, the element in question propagates it by regenerating it immediately to the neighbor elements of the ringlet in the same direction of reception. In such a way, the fault detection information is rapidly bi-directionally propagated in the ringlet.

The type of propagated information depends on the number of faults and the respective priority. In the presence of multiple faults, only the fault with the higher priority is notified, namely each RPR network element regenerates the "keep-alive" message, by taking the decision about which one of the fault indications is to be confirmed as per the respective priority, as hereunder explained.

Once that a fault notification is propagated, every network element has to wait a certain time (of any milliseconds) before taking the necessary steps, in order to be sure that the fault notification is persistent, that is it is not replaced by another fault indication with a higher priority.

After this period of time, the fault is considered as persistent: then, the protection switching method of data traffic in the RPR ringlet will be established.

Each network element controls the incoming part of both the ringlets for a direct fault detection.

As far as the format of the RPR packet which contains the "keep-alive" message is concerned, the packet is of the control type and as already said, it is sent by the network element in both the outgoing directions on two ringlets.

The part of header of the "keep-alive" message (with reference to the generic format described in the introduction) contains at least the following data in the fields that are of interest for the method according to the present invention:
- identification of the RPR destination station: broadcast;
- Frame type: RPR control packet;
- protocol type: it identifies the protection protocol;
- "time-to-live" TTL= 1: the packet is regenerated in the next network element;
- CoS: class of service (namely, priority), with subsequent generation and forwarding in the shortest period of time foreseen by the general system (known *per se*) for the generation of the RPR packets.

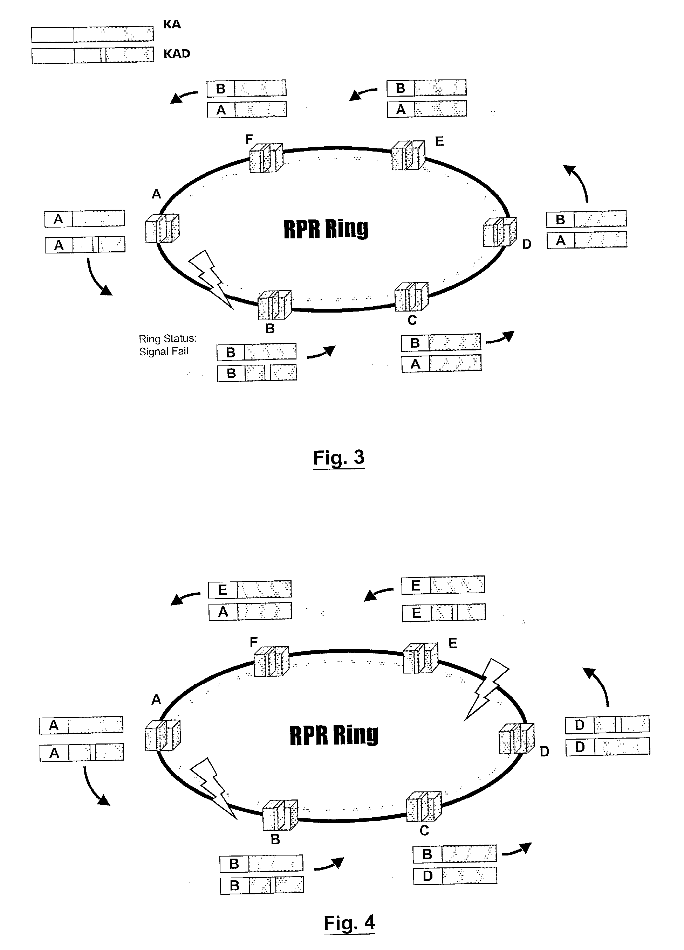

On the contrary, the part of payload of the "keep-alive" message contains the following information:
- MAC address of the RPR network element which detects the fault: this field is placed at logic zero in case of absence of faults (as also shown in Fig. 2);
- fault type: also this field is placed at logic zero in case of fault absence;
- direction indicator; it is placed at logic 1 in the issuance direction which is opposite to the fault detection place (type of KAD message in Fig. 3), and at logic 0 in the ringlet direction where the fault is detected (type of KA message in Fig. 3); this field is used to identify the direction (which of the two ringlets) where the fault has occurred; also this field is placed at logic zero on both the directions in case of fault absence.

As already said, to each type of fault a priority is associated. For example, following priorities from bottom to top in the various types of fault are implemented:
- no fault;
- wait-to-restore WTR: it is generated to restore the fault and indicates the waiting time interval to restore completely the connection after the repairing of the fault and when the repair has become stable; it is generated in case of restoring after a single fault;
- manual protection switching: it is manually implemented by the operator; this condition can be eliminated from the network in case of a fault of higher priority;
- signal degrade;
- lack of signal: due to a line break (for instance due to a fiber cut);
- forced protection switching: this condition is forced by the operator in a persistent manner.

As already said, in general in the presence of multiple faults, only the fault with the highest priority is notified (namely regenerated by each network element), while the others are rejected; only in the case of contemporary faults of forced switching type and lack of signal, these faults can co-exist on the same ringlet, as two equal fault indications can be co-existing.

Then, in case of multiple faults, all the network elements which detect the fault directly have to issue a "keep-alive" message which contains their MAC address and the fault type. The direction indicator shall be placed at logic 1 or 0 as above explained.

In case of dual local fault detected by the same network element both on one and two adjacent routes on both the directions, each fault is signaled only in the direction which is opposite (counter-rotating) to the detection direction.

If for a certain period of time, a network element does not receive the "keep-alive" message from the neighbor element, the respective connection is considered in the condition of lack of signal, resulting in the issue of a corresponding signaling of fault.

As already said, in the case of regeneration, each network element which receives a fault notification on a ringlet (in one direction) has to transmit it - by regenerating it immediately - to the neighbor element on the same ringlet (direction). If the same element which receives a fault notification also detects locally another fault, then that element shall transmit the fault notification with a higher priority between both the priorities, by rejecting the other. If these have the same priority, then the element shall propagate the fault notification detected locally. If the local fault is a forced switching or a lack of signal, the local fault is always propagated.

Once that a fault notification is sent, all the "keep-alive" messages - which have been sent later - shall contain that fault notification up to the replacement, as above said. This allows for a very fast reaction to the possible lost of a protection message.

In the Figures from 2 to 5 some examples are shown of checking and generating situations of "keep-alive" messages. As in the Figure 1, the two counter-rotating ringlets are respectively indicated by the grey color (inner ringlet with a clockwise rotation direction) and by the black color (outer ringlet with the counterclockwise rotation direction). Furthermore, in the Figures the contents of the message payload is shown.

Fig. 2 shows the information sent in case of no fault: on both the ringlets, the various network elements generate the messages of periodical type with contents at logical zero, as above said.

Fig. 3 shows the information sent in case of a ringlet with a fault and a break of both the routes among the same network elements A and B.

Both the nodes A and B put their MAC address in both the directions, being the elements where the fault occurs. Later, the propagation of messages shall follow the above said rules, therefore, on the outer ringlet (black) the MAC address which is propagating shall be B, while on the inner ringlet (grey) it shall be A. As you can see, in this way, all the elements are aware of the fact that the fault occurred between A and B. In this way, the protection switching algorithm will provide a switching in order to exclude the direct route between A and B and to re-route the traffic on the remaining part between B and A.

Furthermore, A sets on the logical 1 the direction indicator bit in the counter-clockwise issuance direction (outer ringlet, black) and B sets it in the clockwise direction (inner ringlet, grey).

In the part relating to the fault type, each element shall regenerate the indication as per the above description.

Figure 4 shows the information sent in case of ringlet with two faults, each fault resulting in a break of both the routes among the same network elements, the pair A and B, and the pair D and E, respectively. For each one of the two pairs, it is valid what said for the pairs A and B of Fig. 3. Being interrupted the routes which are directed between A and B and between D and E, the algorithm of protection switching shall determine such a switching to exclude these routes and to re-route the traffic on the remaining routes A-F-E and B-C-D.

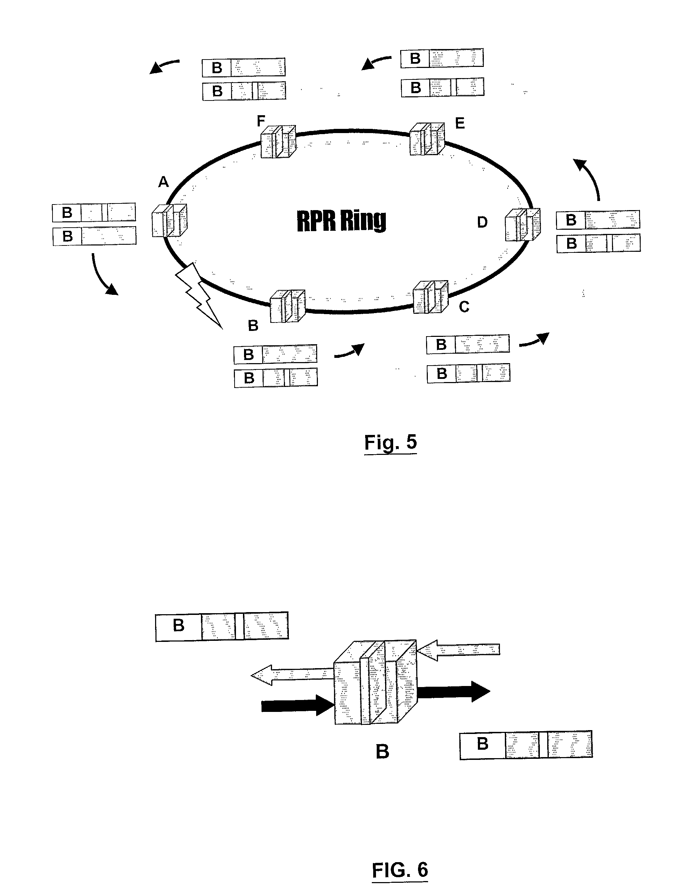

Fig. 5 shows the information sent in the case of a ringlet with a fault and an interruption of traffic in only one link, in only one direction.

The faults detected on only one route of the pair are considered bi-directional for the data and unidirectional for the "keep-alive" messages.

With reference to Fig. 5, this means that when an element A receives the notification from the element B and the notification becomes stable, the traffic between the elements A and B is cut, but the notifications from B to A are nevertheless transmitted.

Therefore, as far as the traffic is concerned, this case is similar to the one of Fig. 3.

With reference to Fig. 6, as above said, in the case of dual local fault detected by the same network element both on one and two adjacent links on both the directions, each one of the faults is signaled in the only direction which is opposite (counter-rotating) to the direction of detection. Therefore, for example, if this occurs to the network element B, the later shall issue in the opposite route of the same connection a "keep-alive" message containing the fault indication concerning the other link of the same direction with MAC address MAC = B, and the direction indicator at logical 1. This for both the directions.

As the fault notifications are immediately transmitted, each network element has to "integrate" the notifications received before taking decisions on the data traffic. This means that the element waits for some time (for example some milliseconds) before considering the message as final. The integration has to be implemented after the forwarding of the fault notifications to the neighbor elements.

In case of contemporary faults with different priorities, it is possible that an unwanted switching is performed, owing to the propagation time of transmitted messages. This is prevented by putting the integration time at least equal to the roundtrip time of a message on the whole ringlet.

With reference to Figures 7 and 8, the method for the generation of "keep-alive" messages in the case of connection between the elements A and B (Fig. 1) will be now explained in detail.

Each network element generates periodically, through a PER block containing a timer, a "keep-alive" message, which, as already said, is sent to both the neighbor elements (black and grey arrows in Fig. 8) either on both the transmission directions or on the only direction where it has been received, according to the detection place of fault. The message is composed according to the definition of the respective above described fields.

Even if said periodicity is usually equal in all the elements (for instance, 1 ms), the respective phase is not correlated, therefore, each element shall have an own instant for the generation of message independently from the other elements. Said message is at logical zero under conditions of fault absence: in Fig. 7 this corresponds to the initial condition OK1 outgoing from A and B (Out A, Out B), and then also at the inlet of B (In B).

Let's suppose that at a certain instant, the element A detects a fault shown by its inner block RIL: said fault signaling can originate from either another RPR network element through a "keep-alive" message, or from the inside of the same element, for instance generated by the physical transport layer (SDH), or directly detected as signal absence or absence of "keep-alive" message.

The fault signal SET outgoing from RIL determines the generation by the block ASY, which is within A, of a "keep-alive" message F of asynchronous type (*una-tantum*) which shows the fault indication; this message F is immediately sent to the outlet of A (Out A), for instance the one towards B, with the top priority. B receives it (In B) and regenerates it immediately towards the outlet (Out B).

Also this "keep-alive" message, as already said, is sent either on both the transmission directions towards the both adjacent elements (black and grey arrows in Fig. 8) or only on the direction of receiving, according to the place of fault detection.

Starting from this instant, each message outgoing from the PER block (at the outlets both of A and B), periodically sent, shows also said fault condition F received from ASY. In other words, ASY forces the message F into PER. This is valid till the fault condition at the outlet of RIL remains; its disappearance is considered as a reset RES for the block PER which restores the generation of a periodical "keep-alive" message at logical zero (absence of faults), OK2 in fig. 7, which is re-propagated on the ringlets as above described.

The block RIL can detect the origin of the fault signaling, whether within the network element or outside it, at another element and to control the blocks PER and ASY in order to send the "keep-alive" message in only one direction or on both the directions.

From the above said description, the man skilled in the art can, without giving other explanations, obtain all the necessary information for implementing the method to propagate the fault information on a RPR network, which is the subject of the present invention, and also the generation of the respective RPR packets and their circulation in the network, by utilizing also the common general acknowledge of the already known RPR transport techniques.

## Claims

1. Method for propagating a fault information in a Resilient Packet Ring telecommunication network, the network comprising a number of Resilient Packet Ring network elements (A, ... F) interconnected by links and forming two counter-rotating ringlets, wherein packets circulate in two opposite directions, **characterized in that** a continuous logical information channel is implemented, the channel being dedicated to the fault information exchange on both the Resilient Packet Ring ringlets, wherein each Resilient Packet Ring network element sends keep-alive messages containing the fault information to the adjacent elements in the network.

2. Method according to claim 1, **characterized in that** the step of sending keep-alive messages comprises a synchronous forwarding of periodical messages, and an asynchronous forwarding of *una-tantum* messages to report the just generated fault indications, wherein said messages have the top priority.

3. Method according to claim 2, **characterized in that**, for each network element:
if a fault is detected by the network element itself, the latter issues a keep-alive message which is sent to the ringlet adjacent elements in both the directions;
if a fault has been detected by another element which has sent a keep-alive message, said element propagates it by regenerating it to the further elements of the ringlet in the same direction of receiving.

4. Method according to claim 1, **characterized in that**
each RPR network element which receives a keep-alive message containing fault information, transmits it by immediately regenerating it;
said faults have different priorities,
in case wherein said element detects locally another fault, it will transmit the fault information having the higher priority and discard the other,
if these have the same priority, then the element will propagate the fault notification locally detected, and
said fault information is sent also in the next messages up to the replacement thereof either by a higher priority fault indication or by an indication of fault repaired.

5. Method according to claim 4, **characterized in that** each Resilient Packet Ring network element which receives a fault information waits for a certain period of time before considering the message as final, in order to be sure that the fault notification is persistent and not replaced by another fault indication with higher priority.

6. Method according to claim 5, **characterized in that** a Resilient Packet Ring network element which detects a fault indication regarding an incoming direction on a ringlet, considers also the parallel direction outgoing from the other ringlet as faulted.

7. Method as claimed in whichever of the preceding claims, **characterized in that** said keep-alive messages are sent under the form of RPR control packets comprising a header and a payload, wherein each packet contains at least the following information:
a) in the header:
identification of the destination RPR network element: broadcast type; type of protection protocol;
regenerated packet in the next network element ("time-to-live" TTL = 1);
class of service (CoS) or top priority;
b) in the payload:
MAC address of the RPR network element which detects the fault; type of fault;
direction indicator wherein the fault has occurred.

8. Method according to claim 7, **characterized in that**, in case of absence of faults, said MAC address and said type of fault are set to logical zero; and wherein said direction indicator: is set to logical one in the issuance direction which is opposite to the fault detection direction, and to logical 0 in the ringlet direction where the fault is detected; furthermore, it is set to logical zero on both the directions in case of fault absence.

9. Method according to claim 4, **characterized in that** in the case of dual local fault detected by the network element itself, both on one and two adjacent links on both the directions, each fault is signaled in the only direction which is opposite (counter-rotating) the one of detection.

10. Packet RPR (Resilient Packet Ring) telecommunications network comprising means for implementing the method for the propagation of fault information in a RPR network and corresponding RPR packet as claimed in any of the preceding claims.
